# EUROPÄISCHE PATENTANMELDUNG

(11) **EP 2 388 236 A1**
(43) Veröffentlichungstag der Anmeldung: **23.11.2011**
(21) Anmeldenummer: 10163555.5
(22) Anmeldetag: 21.05.2010
(51) Int. Cl.: C01B 33/035, H02J 3/00, H02M 5/257

(54) **Stromversorgung mit einer ersten und einer zweiten Spannungsversorgung**

(71) Anmelder: AEG Power Solutions B.V., 1161 AH Zwanenburg (NL)
(72) Erfinder: Wallmeier, Peter, 59556, Lippstadt (DE); Ferber, Christian, 59519, Möhnesee (DE)
(74) Vertreter: Graefe, Jörg

(57) **Zusammenfassung**

Die Erfindung betrifft eine Stromversorgung, insbesondere eine Stromversorgung für einen Reaktor zur Herstellung von Polysilicium nach dem Siemens-Verfahren, mit einer ersten Stromversorgungseinrichtung (10),
mit einer zweiten Stromversorgungseinrichtung (20) mit wenigstens zwei Wechselstromstellern (22),
mit einer Anschlussgruppe (30) umfassend wenigstens zwei Lastanschlüsse (31,32,33,34,35) zum Anschließen wenigstens einer Last (41,42,43,44), von denen ein erster Anschluss (31) unmittelbar, mit einem Ausgang (24) der zweiten Stromversorgungseinrichtung (20) verbunden ist,
und mit einer ersten Schaltergruppe (50), die der Anschlussgruppe (30) zugeordnet ist, mit Schaltern (51,52,53,54,55) zum Verbinden der Lastanschlüsse (31,32,33,34,35) mit Ausgängen (15,16,17,18,19) der ersten Stromversorgungseinrichtung (10),
wobei die Stromversorgungseinrichtung
weitere zweite Stromversorgungsseinrichtungen (20),
weitere Anschlussgruppen (30) umfassend wenigsten zwei Lastanschlüsse (31,32,33,34,35), wobei Lastanschluss (31) unmittelbar mit einem Ausgang (24) einer der weiteren zweiten Stromversorgungseinrichtungen (20) verbunden ist,
und weitere erste Schaltergruppen (50) aufweist,
die jeweils einer der weiteren Anschlussgruppen (30) zugeordnet sind, mit ersten Schaltern (51,52,53,54,55) zum Verbinden der Lastanschlüsse (31,32,33,34,35) mit den Ausgängen (11,12,13,14,15) der ersten Stromversorgungseinrichtungen (10).

## Beschreibung

Die Erfindung betrifft eine Stromversorgungsanordnung, insbesondere eine Stromversorgungsanordnung für einen Reaktor zur Herstellung von Polysilicium nach dem Siemens-Verfahren,
- mit einer ersten Stromversorgungseinrichtung,
- mit einer zweiten Stromversorgungseinrichtung umfassend wenigstens zwei Wechselstromsteller und eine Spannungsfolgesteuerung zur Steuerung der Wechselstromsteller,
- mit einer Anschlussgruppe umfassend wenigstens zwei Anschlüsse zum Anschließen wenigstens einer Last, von denen ein erster Anschluss unmittelbar, d.h. ohne Zwischenschaltung eines Schalters mit einem Ausgangsanschluss der zweiten Stromversorgungseinrichtung verbunden ist, und
- mit einer ersten Schaltmittelgruppe, die der Anschlussgruppe zugeordnet ist und mit Schaltmitteln zum Verbinden und zum Trennen der Anschlüsse der Anschlussgruppe mit bzw. von Ausgangsanschlüssen der ersten Stromversorgungseinrichtung ausgestattet ist.

Eine derartige Stromversorgungsanordnung ist aus der Veröffentlichung der deutschen Patentanmeldung unter der Veröffentlichungsnummer DE 10 2009 021 403 A1 aber auch aus der Gebrauchsmusterschrift DE 20 2009 003 325 U1 bekannt. Die in den Veröffentlichungen beschriebenen Stormversorgungsanordnungen werden in Reaktoren zur Herstellung von Polysilicium nach dem Siemens-Verfahren bzw. durch chemische Gasabscheidung genutzt. Die erste Stromversorgungseinrichtung der dort beschriebenen Stromversorgungsanordnungen stellt eine Mittelspannung (1 bis 30 kV Nennspannung) bereit, die zum Beginn eines Abscheidevorgangs des Siemens-Verfahrens an Siliciumdünnstäbe gelegt werden kann. Nach einem Zünden der Stabpaare kann dann die Stromversorgung von der zweiten Stromversorgungsanordnung übernommen werden. Die zweite Stromversorgungseinrichtung umfasst mehrere Eingangsanschlüsse und mehrere Wechselstromsteller. Die Eingangsanschlüsse werden mit unterschiedlichen elektrischen Potentialen verbunden, die beispielsweise an sekundärseitigen Anzapfungen eines Transformators bereitgestellt werden können. Die vom Transformator zur Verfügung gestellten Spannungen liegen im Niederspannungsbereich (0 bis 3 kV Nennspannung). Die Wechselstromsteller der zweiten Stromversorgungseinrichtung sind einerseits mit jeweils einem der Eingangsanschlüsse und andererseits mit dem Ausgangsanschluss verbunden. Bei den Wechselstromstellern handelt es sich um Thyristorsteller. Es können aber auch Steller mit anderen Stromrichterventilen verwendet werden. Die Wechselstromsteller werden von einer Spannungsfolgesteuerung angesteuert. Eine Spannungsfolgesteuerung ist beispielsweise in früheren Anmeldungen der Anmelderin, aber auch in dem Buch "Thyristorized Power Controllers" von G. K. Dubey, S. R. Doradla, A. Joshi und R. M. K. Sinha beschrieben. Die von der zweiten Stromversorgungseinrichtung bereitgestellte Spannung ist eine Niederspannung.

Die o. a. Veröffentlichungen betreffen Stromversorgungsanordnungen bei denen vier Lasten, d.h. vier Stabpaare mit elektrischer Energie versorgt werden. Reaktoren für das Siemens-Verfahren werden in jüngerer Zeit für deutlich mehr als vier Stabpaare ausgelegt. Bekannt sind zum Beispiel Reaktoren die für 24 Stabpaare ausgelegt sind. Eine Stromversorgungsanordnung für einen Reaktor für 24 Stabpaare ist zum Beispiel aus der Gebrauchsmusterschrift DE 20 2007 001 083 U1 bekannt. Die aus dieser Gebrauchsmusterschrift bekannte Stromversorgungsanordnung weist jedoch keine erste Stromversorgungseinrichtung auf, die während des Beginns des Abscheideprozesses die Versorgung der Stabpaare mit einer Mittelspannung übernimmt. Die aus der Gebrauchsmusterschrift DE 20 2007 001 083 U1 bekannte Stromversorgungsanordnung weist mehrere zweite Stromversorgungseinrichtungen auf, die die Stabpaare mit elektrischer Energie versorgen. Die Stabpaare sind gruppiert und den Gruppen ist wenigstens eine zweite Stromversorgungseinrichtung zugeordnet. Innerhalb der Gruppe werden die Stabpaare zum Beginn des Abscheideprozesses in Reihe geschaltet und später parallel geschaltet. Zum Wechsel zwischen einer Versorgung der Stabpaare in Reihenschaltung und einer Versorgung in Parallelschaltung sind Umschaltmittel vorgesehen. Insbesondere wegen der Umschaltung zwischen dem Parallelbetrieb und dem Reihenbetrieb der Stabpaare ist die aus der Gebrauchsmusterschrift DE 20 2007 001 083 U1 bekannte Stromversorgungsvorrichtung aufwändig.

Hier setzt die vorliegende Erfindung an.

Der vorliegenden Erfindung liegt das technische Problem zu Grunde, eine Stromversorgungsanordnung der eingangs genannten Art so weiter zu entwickeln, dass eine größere Anzahl von Stabpaaren mit elektrischer Energie versorgt werden können.

Dieses Problem wird dadurch gelöst, dass die Stromversorgungseinrichtung
- weitere zweite Stromversorgungsseinrichtungen umfassend wenigstens zwei Wechselstromsteller und eine Spannungsfolgesteuerung zur Steuerung der Wechselstromsteller,
- weitere Anschlussgruppen umfassend wenigsten zwei Anschlüsse zum Anschließen wenigstens einer Last, wobei von den Anschlüssen jeder Anschlussgruppe ein erster Anschluss unmittelbar, d.h. ohne Zwischenschaltung eines Schalters mit einem Ausgangsanschluss einer der weiteren zweiten Stromversorgungseinrichtungen verbunden ist, und
- weitere erste Schaltmittelgruppen aufweist, die jeweils einer der weiteren Anschlussgruppen zugeordnet sind und mit ersten Schaltmitteln zum Verbinden und zum Trennen der Anschlüsse der Anschlussgruppe mit bzw. von den Ausgangsanschlüssen der ersten Stromversorgungseinrichtungen ausgestattet sind.

Nach einem ebenfalls vorgeschlagenen erfindungsgemäßen Verfahren zum Versorgen von an Anschlüssen von Anschlussgruppen einer Stromversorgungsanordnung, insbesondere bei einer vorgenannten Stromversorgungsanordnung anschließbaren Lasten werden die Anschlüsse der Anschlussgruppen nacheinander über Schaltmittel der der Anschlussgruppe zugeordneten ersten Schaltmittelgruppe mit den Ausgangsanschlüssen einer ersten Stromversorgungseinrichtung verbunden, während die Anschlüsse der übrigen Anschlussgruppen von den Ausgangsanschlüssen der ersten Stromversorgungseinrichtung getrennt sind. Nachdem die Anschlüsse einer Anschlussgruppe über die Schaltmittel der der Anschlussgruppe zugeordneten ersten Schaltmittelgruppe verbunden waren, werden diese von einer der Anschlussgruppe zugeordneten zweiten Stromversorgungseinrichtung mit Strom versorgt.

Vorzugsweise kann jeder Anschluss einer Anschlussgruppe über eines der Schaltmittel der zugeordneten Schaltmittelgruppe mit genau einem der Ausgangsanschlüsse der ersten Stromversorgungseinrichtung verbunden werden.

In einer besonders geeigneten Ausführung der Erfindung weist jede Anschlussgruppe einen zweiten Anschluss auf. Der erste Anschluss und der zweite Anschluss jeder Anschlussgruppe können über Schaltmittel einer zweiten Schaltmittelgruppe mit einem Bezugspotential verbunden werden.

Jede Anschlussgruppe einer erfindungsgemäßen Stromversorgungsanordnung kann eine Anzahl von 2*n+1 Anschlüssen aufweisen, wobei n eine natürliche Zahl ist. Von den 2*n+1 Anschlüssen kann eine erste Teilgruppe von n+1 Anschlüssen, darunter vorzugsweise der erste Anschluss und der zweite Anschluss, mittels der Schaltmittel der zweiten Schaltmittelgruppe mit dem Bezugspotential verbunden werden.

Die erste Stromversorgungseinrichtung einer erfindungsgemäßen Stromversorgungsanordnung kann eine Anzahl von 2*m+1 Ausgangsanschlüssen aufweisen, wobei m eine natürliche Zahl ist. Die Anzahl m und die Anzahl n können gleich sein. Ein erster Ausgangsanschluss und ein zweiter Ausgangsanschluss können über die Schaltmittel der ersten Schaltmittelgruppe mit den ersten Anschlüssen und den zweiten Anschlüssen der Anschlussgruppen verbindbar sein. Der erste Ausgangsanschluss und der zweite Ausgangsanschluss kann im Betrieb der ersten Stromversorgungseinrichtung auf dem ersten Potential liegen.

Von den 2*m+1 Ausgangsanschlüssen kann eine erste Teilgruppe von p+1 Ausgangsanschlüssen, darunter der erste Ausgangsanschluss und der zweite Ausgangsanschluss im Betrieb der ersten Stromversorgungseinrichtung auf einem bzw. dem ersten Potential liegen, wobei p eine natürliche Zahl kleiner oder gleich m ist. Von den 2*m+1 Ausgangsanschlüssen kann eine zweite Teilgruppe von p Ausgangsanschlüssen auf einem zweiten Potential liegen. Die an den Ausgangsanschlüssen der zweiten Stromversorgungseinrichtungen bereitstellbare Nennspannung der zweiten Stromversorgungseinrichtungen kann wenigstens das m-fache der zwischen den Ausgangsanschlüssen der ersten Teilgruppe und den Ausgangsanschlüssen der zweiten Teilgruppe der ersten Stromversorgungseinrichtung bereitstellbaren Nennspannung der ersten Stromversorgungseinrichtung betragen.

Eine erfindungsgemäße Stromversorgungsanordnung kann wenigstens einen Transformator aufweisen, der sekundärseitig mehrere Anzapfungen aufweist. Eine äußere Anzapfung der sekundärseitigen Anzapfungen kann mit dem zweiten Anschluss wenigstens einer Anschlussgruppe verbunden sein. Die übrigen sekundärseitigen Anzapfungen sind vorzugsweise mit Eingangsanschlüssen der zweiten Stromversorgungseinrichtungen verbunden. Vorteilhaft weist die Stromversorgungsanordnung drei Transformatoren auf, die primärseitig im Dreieck geschaltet und an unterschiedliche Außenseiter eines dreiphasigen Netzes angeschlossen sind. An die Sekundärseite der Transformatoren sind möglichst gleich viele zweite Stromversorgungseinrichtungen angeschlossen, so dass die Transformatoren gleich belastet werden bzw. das Netz symmetrisch belastet wird.

Gemäß der Erfindung kann die erste Stromversorgungseinrichtung wenigstens einen Frequenzumrichter aufweisen. Ferner kann die erste Stromversorgungseinrichtung wenigstens einen Transformator aufweisen.

Ein Ausführungsbeispiel für eine erfindungsgemäße Stromversorgungsanordnung ist anhand der Zeichnung näher beschrieben. Es zeigt

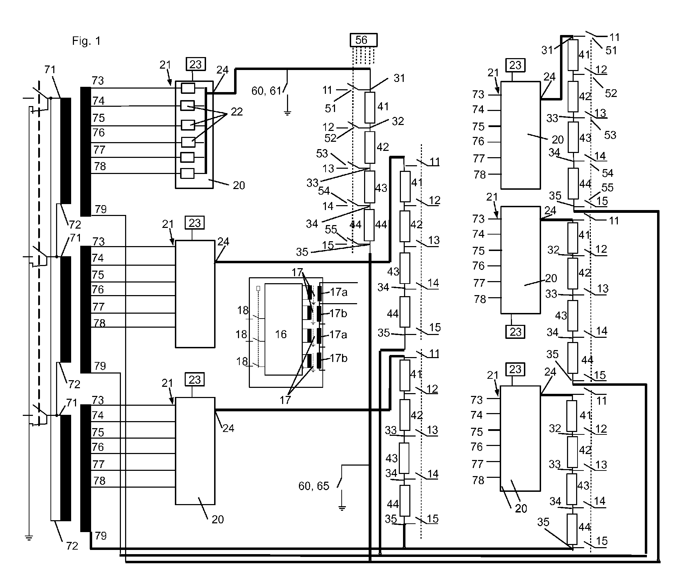

Fig. 1 ein Schaltbild einer erfindungsgemäßen Stromversorgungsanordnung.

Die in der Figur 1 dargestellte Stromversorgungsanordnung weist eine erste Stromversorgungseinrichtung 10 auf. Die erste Stromversorgungseinrichtung 10 weist drei Eingangsanschlüsse 18 auf, die über einen dreipoligen Schalter mit Außenleitern eines dreiphasigen Netzes verbunden sind. Innerhalb der ersten Stromversorgungseinrichtung 10 sind die Eingangsanschlüsse 18 über einen Frequenzumformer 16 mit einem ersten Paar und einem zweiten Paar von Transformatoren 17 verbunden. Jedes Paar hat einen ersten Transformator 17a und einen zweiten Transformator 17b. Die Transformatoren 17 haben Sekundärspulen, deren Anzapfungen mit Ausgangsanschlüssen 11, 12, 13, 14, 15 verbunden sind.

Ein erster Ausgangsanschluss 11 und ein zweiter Ausgangsanschluss 15 sind mit nur einer Anzapfung einer Sekundärspule eines Transformators 17 verbunden, die zu unterschiedlichen Paaren von Transformatoren 17 gehören. Der erste Ausgangsanschluss 11 ist mit dem ersten Transformator 17a des ersten Paares und der zweite Ausgangsanschluss 15 mit dem zweiten Transformator 17b des zweiten Paares verbunden. Ein dritter Ausgangsanschluss 13 ist mit einer Anzapfung des zweiten Transformators 17b des ersten Paares und mit einer Anzapfung des ersten Transformators 17a des zweiten Paares verbunden. Die übrigen Ausgangsanschlüsse 12, 14 sind mit jeweils einer Anzapfung des ersten Transformators 17a und mit einer Anzapfung des zweiten Transformators 17b des ersten bzw. zweiten Paares verbunden. Die Sekundärspulen eines Paares von Transformatoren sind gegensinnig gewickelt, so dass bei gleicher Eingangsspannung an den Primärspulen der Transformatoren 17 entgegengesetzte Spannungen über den Sekundärspulen der beiden Transformatoren 17 eines Paare abfallen. Der erste Ausgangsanschluss 11, der zweite Ausgangsanschluss 15 und der dritte Ausgangsanschluss 13 liegen daher auf dem gleichen elektrischen Potential. Die übrigen Ausgangsanschlüsse 12, 14 liegen ebenfalls auf dem gleichen Potential. An die fünf Ausgangsanschlüsse 11, 12, 13, 14, 15 sind vier Lasten 41, 42, 43, 44 angeschlossen.

Die Stromversorgungsanordnung weist ferner drei Transformatoren 70 auf. Die Primärspulen der Transformatoren 70 sind im Dreieck geschaltet und über Anzapfungen 71, 72 an die drei Außenseiter des dreiphasigen Netzes angeschlossen. Über einen dreipoligen Schalter können die Transformatoren 70 vom Netz getrennt werden.

Die Sekundärspulen der Transformatoren 70 weisen Anzapfungen 73, 74, 75, 76, 77, 78 auf. Diese Anzapfungen 73 bis 78 sind mit Eingangsanschlüssen 21 von zweiten Stromversorgungseinrichtungen 20 verbunden. Die Eingangsanschlüsse 21 einer zweiten Stromversorgungseinrichtung 20 sind mit den sekundärseitigen Anzapfungen 73 bis 78 genau eines Transformators 70 verbunden. An einen Transformator 70 können allerdings mehrere zweite Stromversorgungseinrichtungen 20 angeschlossen sein. Im Beispiel ist dargestellt, dass zwei zweite Stromversorgungseinrichtungen 20 an jeden Transformator 70 angeschlossen sind. Jede zweite Stromversorgungseinrichtung 20 weist einen Ausgangsanschluss 24 auf.

Die Stromversorgungsanordnung weist mehrere Anschlussgruppen 30 auf. Jeder zweiten Stromversorgungseinrichtung 20 ist eine Anschlussgruppe 30 zugeordnet und umgekehrt. In jeder Anschlussgruppe 30 ist ein erster Anschluss 31 und ein zweiter Anschluss 35 vorgesehen. Der erste Anschluss 31 jeder Anschlussgruppe 30 ist mit dem Ausgangsanschluss 24 der zugeordneten zweiten Stromversorgungseinrichtung 20 verbunden. Der zweite Anschluss 35 jeder Anschlussgruppe 30 ist mit einer sekundärseitigen Anzapfung 79 des Transformators 70 verbunden, mit dem die der Anschlussgruppe 30 zugeordnete zweite Stromversorgungseinrichtung 20 verbunden ist.

Alle Anschlüsse 31 bis 35 der Anschlussgruppen 30, d.h. auch der erste Anschluss 31 und der zweite Anschluss 35, können über Schaltmittel 51 bis 55 von ersten Schaltmittelgruppen 50 mit den Ausgangsanschlüssen 11 bis 15 der ersten Stromversorgungseinrichtung 10 verbunden werden beziehungsweise mittels dieser Schaltmittel 51 bis 55 von den Ausgangsanschlüssen 11 bis 15 getrennt werden. Jeder Anschlussgruppe 30 ist dabei eine erste Schaltmittelgruppe 50 zugeordnet und umgekehrt. Bei den Schaltmitteln 51 bis 55 handelt es sich um steuerbare Schaltmittel. Die Schaltmittel 51 bis 55 der ersten Schaltmittelgruppen 50 werden von einer zentralen Steuerung 56 gesteuert. Die Steuerung 56 ist so gestaltet, dass immer nur die Schaltmittel 51 bis 55 einer einzigen Schaltmittelgruppe 50 geschlossen sein können. Es können also gleichzeitig nur die Anschlüsse 31 bis 35 einer Anschlussgruppe 30 über die ihnen zugeordneten Schaltmittel 50 bis 55 mit der ersten Stromversorgungseinrichtung 10 verbunden sein. Es ist auch möglich, dass keines der ersten Schaltmittel 51 bis 55 geschlossen ist und somit keine Anschlüsse 31 bis 35 einer der Anschlussgruppen 30 mit der ersten Stromversorgungseinrichtung 10 verbunden sind.

Die Stromversorgungsanordnung kann zweite Schaltmittelgruppen 60 aufweisen, von denen jeweils eine zweite Schaltmittelgruppe 60 einer Anschlussgruppe 30 zugeordnet ist. Der erste Anschluss 31 und der zweite Anschluss 35 jeder Anschlussgruppe 30 kann über Schaltmittel 61, 62 einer der zweiten Schaltmittelgruppen 60 mit einem Bezugspotential verbunden werden. Bevorzugt ist das dann der Fall, wenn die Anschlüsse 31 bis 35 einer Anschlussgruppe 30 über die Schaltmittel 51 bis 55 mit der ersten Stromversorgungseinrichtung 10 verbunden sind.

Ferner wird kurz ein Verfahren beschrieben, mit dem diese Stromversorgungseinrichtung oder eine ähnliche Stromversorgungseinrichtung betrieben werden kann. Nach dem Verfahren wird die Anschlussgruppe 30 nacheinander zunächst an die erste Stromversorgungseinrichtung 10 angeschlossen, wozu die Anschlüsse 31, 32, 33, 34, 35 der gerade an die erste Stromversorgungseinrichtung 10 angeschlossenen Anschlussgruppe 30 über die Schaltmittel 51, 52, 53, 54, 55 einer ersten Schaltmittelgruppe 50 mit den Ausgangsanschlüssen 11, 12, 13, 14, 15 der ersten Stromversorgungseinrichtung 10 verbunden sind. Sind die Anschlüsse 31, 32, 33, 34, 35 einer Anschlussgruppe 30 nicht mit der ersten Stromversorgungseinrichtung 10 verbunden, sind die Schaltmittel 51, 52, 53, 54, 55 der der Anschlussgruppe 30 zugeordneten ersten Schaltmittelgruppe 50 geöffnet. Nachdem die Anschlüsse 31, 32, 33, 34, 35 einer Anschlussgruppe 30 für eine vorbestimmte Zeit, vorzugsweise bis zur Zündung der als Lasten 41, 42, 43, 44 angeschlossenen Siliciumdünnstabpaare, an der ersten Stromversorgungseinrichtung 10 angeschlossen waren, werden die Schaltmittel 51, 52, 53, 54, 55 geöffnet. Anschließend erfolgt eine Stromversorgung über die der Anschlussgruppe 30 zugeordnete zweite Stromversorgungseinrichtung 20.

### Liste der Bezugszeichen

- 10: erste Stromversorgungseinrichtung
- 11: erster Ausgangsanschluss
- 12: Ausgangsanschluss
- 13: dritter Ausgangsanschluss
- 14: Ausgangsanschluss
- 15: zweiter Ausgangsanschluss
- 16: Frequenzumformer
- 17: Transformator
- 18: Eingangsanschlüsse
- 20: zweite Stromversorgungseinrichtungen
- 21: Eingangsanschlüsse
- 22: Wechselstromsteller
- 23: Spannungsfolgesteuerung
- 24: Ausgangsanschluss
- 30: Anschlussgruppen
- 31: erster Anschluss
- 32: Anschluss
- 33: Anschluss
- 34: Anschluss
- 35: zweiter Anschluss
- 41: Last
- 42: Last
- 43: Last
- 44: Last
- 50: erste Schaltmittelgruppen
- 51: Schaltmittel
- 52: Schaltmittel
- 53: Schaltmittel
- 54: Schaltmittel
- 55: Schaltmittel
- 56: Steuerung der Schaltmittel
- 60: zweite Schaltmittelgruppen
- 61: Schaltmittel
- 65: Schaltmittel
- 70: Transformatoren
- 71: primärseitiger Anschluss
- 72: primärseitiger Anschluss
- 73: sekundärseitiger Anschluss
- 74: sekundärseitiger Anschluss
- 75: sekundärseitiger Anschluss
- 76: sekundärseitiger Anschluss
- 77: sekundärseitiger Anschluss
- 78: sekundärseitiger Anschluss
- 79: sekundärseitiger Anschluss

## Patentansprüche

1. Stromversorgungsanordnung, insbesondere Stromversorgungsanordnung für einen Reaktor zur Herstellung von Polysilicium nach dem Siemens-Verfahren,
- mit einer ersten Stromversorgungseinrichtung (10),
- mit einer zweiten Stromversorgungseinrichtung (20) umfassend wenigstens zwei Wechselstromsteller (22) und eine Spannungsfolgesteuerung (23) zur Steuerung der Wechselstromsteller (22),
- mit einer Anschlussgruppe (30) umfassend wenigstens zwei Anschlüsse (31, 32, 33, 34, 35) zum Anschließen wenigstens einer Last (41, 42, 43, 44), von denen ein erster Anschluss (31) unmittelbar, d.h. ohne Zwischenschaltung eines Schalters mit einem Ausgangsanschluss (24) der zweiten Stromversorgungseinrichtung (20) verbunden ist, und
- mit einer ersten Schaltmittelgruppe (50), die der Anschlussgruppe (30) zugeordnet ist, mit Schaltmitteln (51, 52, 53, 54, 55) zum Verbinden und zum Trennen der Anschlüsse (31, 32, 33, 34, 35) der Anschlussgruppe (30) mit bzw. von Ausgangsanschlüssen (15, 16, 17, 18, 19) der ersten Stromversorgungseinrichtung (10),
**dadurch gekennzeichnet,**
**dass** die Stromversorgungseinrichtung
- weitere zweite Stromversorgungsseinrichtungen (20) umfassend wenigstens zwei Wechselstromsteller (22) und eine Spannungsfolgesteuerung (23) zur Steuerung der Wechselstromsteller (22),
- weitere Anschlussgruppen (30) umfassend wenigstens zwei Anschlüsse (31, 32, 33, 34, 35) zum Anschließen wenigstens einer Last (41, 42, 43, 44), wobei von den Anschlüssen (31, 32, 33, 34, 35) jeder Anschlussgruppe (30) ein erster Anschluss (31) unmittelbar, d.h. ohne Zwischenschaltung eines Schalters mit einem Ausgangsanschluss (24) einer der weiteren zweiten Stromversorgungseinrichtungen (20) verbunden ist, und
- weitere erste Schaltmittelgruppen (50), die jeweils einer der weiteren Anschlussgruppen (30) zugeordnet sind, mit ersten Schaltmitteln (51, 52, 53, 54, 55) zum Verbinden und zum Trennen der Anschlüsse (31, 32, 33, 34, 35) der Anschlussgruppe (30) mit bzw. von den Ausgangsanschlüssen (11, 12, 13, 14, 15) der ersten Stromversorgungseinrichtungen (10)
aufweist.

2. Stromversorgungsanordnung nach Anspruch 1, **dadurch gekennzeichnet, dass** jeder Anschluss (31, 32, 33, 34, 35) einer Anschlussgruppe (30) über die Schaltmittel (51, 52, 53, 54, 55) der zugeordneten Schaltmittelgruppe mit genau einem der Ausgangsanschlüsse (11, 12, 13, 14, 15) der ersten Stromversorgungseinrichtung (10) verbindbar ist.

3. Stromversorgungsanordnung nach Anspruch 1 oder 2, **dadurch gekennzeichnet, dass** jede Anschlussgruppe (30) einen zweiten Anschluss (35) aufweist.

4. Stromversorgungsanordnung nach Anspruch 3, **dadurch gekennzeichnet, dass** der erste Anschluss (31) und der zweite Anschluss (35) jeder Anschlussgruppe (30) über Schaltmittel (61, 65) einer zweiten Schaltmittelgruppe (60) mit einem Bezugspotential verbindbar ist.

5. Stromversorgungsanordnung nach Anspruch 4, **dadurch gekennzeichnet, dass** jede Anschlussgruppe (30) eine Anzahl von 2*n+1 Anschlüssen aufweist, wobei n eine natürliche Zahl ist.

6. Stromversorgungsanordnung nach Anspruch 5, **dadurch gekennzeichnet, dass** von den 2*n+1 Anschlüssen eine erste Teilgruppe von n+1 Anschlüssen, darunter der erste Anschluss (31) und der zweite Anschluss (35) mittels der Schaltmittel der zweiten Schaltmittelgruppe (60) mit dem Bezugspotential verbindbar ist.

7. Stromversorgungsanordnung nach einem der Ansprüche 1 bis 6, **dadurch gekennzeichnet, dass** die erste Stromversorgungseinrichtung eine Anzahl von 2*m+1 Ausgangsanschlüssen (11, 12, 13, 14, 15) aufweist, wobei m eine natürliche Zahl ist.

8. Stromversorgungsanordnung nach Anspruch 7, **dadurch gekennzeichnet, dass** ein erster Ausgangsanschluss (11) und ein zweiter Ausgangsanschluss (15) über die Schaltmittel der ersten Schaltmittelgruppe mit den ersten Anschlüssen (31) und den zweiten Anschlüssen (35) derAnschlussgruppen (30) verbindbar sind.

9. Stromversorgungsanordnung nach Anspruch 8, **dadurch gekennzeichnet, dass** der erste Ausgangsanschluss (11) und der zweite Ausgangsanschluss (15) im Betrieb der ersten Stromversorgungseinrichtung auf dem ersten Potential liegen.

10. Stromversorgungsanordnung nach einem der Ansprüche 7 bis 9, **dadurch gekennzeichnet, dass** von den 2*m+1 Ausgangsanschlüssen eine erste Teilgruppe von p+1 Ausgangsanschlüssen, darunter der erste Ausgangsanschluss (11) und der zweite Ausgangsanschluss (15) im Betrieb der ersten Stromversorgungseinrichtung auf einem bzw. dem ersten Potential liegen, wobei p eine natürliche Zahl kleiner oder gleich m ist.

11. Stromversorgungsanordnung nach Anspruch 10, **dadurch gekennzeichnet, dass** von den 2*m+1 Ausgangsanschlüssen eine zweite Teilgruppe von p Ausgangsanschlüssen auf einem zweiten Potential liegen.

12. Stromversorgungsanordnung nach Anspruch 11, **dadurch gekennzeichnet, dass** die an den Ausgangsanschlüssen der zweiten Stromversorgungseinrichtungen (20) bereitstellbare Nennspannung der zweiten Stromversorgungseinrichtungen (20) wenigstens das m-fache der zwischen den Ausganganschlüssen der ersten Teilgruppe und den Ausgangsanschlüssen der zweiten Teilgruppe der ersten Stromversorgungseinrichtung (10) bereitstellbaren Nennspannung der ersten Stromversorgungseinrichtung (10) beträgt.

13. Stromversorgungsanordnung nach einem der Ansprüche 3 bis 13, **dadurch gekennzeichnet, dass** die Stromversorgungsanordnung wenigstens einen Transformator (70) aufweist, der sekundärseitig mehrere Anzapfungen (73, 74, 75, 76, 77, 78, 79) aufweist, wobei eine äußere Anzapfung (79) der sekundärseitigen Anzapfungen (73, 74, 75, 76, 77, 78, 79) mit dem zweiten Anschluss (35) wenigstens einer Anschlussgruppe (30) verbunden ist und die übrigen sekundärseitigen Anzapfungen (73, 74, 75, 76, 77, 78) mit Eingangsanschlüssen der zweiten Stromversorgungseinrichtungen (20) verbunden sind.

14. Verfahren zum Versorgen von an Anschlüssen (31, 32, 33, 34, 35) von Anschlussgruppen (30) einer Stromversorgungsanordnung, insbesondere nach einem der Ansprüche 1 bis 13, anschließbaren Lasten (41, 42, 43, 44, 45), **dadurch gekennzeichnet, dass** die Anschlüsse (31, 32, 33, 34, 35) der Anschlussgruppen (30) nacheinander über Schaltmittel (51, 52, 53, 54, 55) der der Anschlussgruppe (30) zugeordneten ersten Schaltmittelgruppe (50) mit den Ausgangsanschlüssen (11, 12, 13, 14, 15) einer ersten Stromversorgungseinrichtung (10) verbunden werden, während die Anschlüsse (31, 32, 33, 34, 35) der übrigen Anschlussgruppen (30) von den Ausgangsanschlüssen (11, 12, 13, 14, 15) der ersten Stromversorgungseinrichtung (10) getrennt sind.

15. Verfahren nach Anspruch 14, **dadurch gekennzeichnet, dass** nachdem die Anschlüsse (31, 32, 33, 34, 35) einer Anschlussgruppe (30) über die Schaltmittel (51, 52, 53, 54, 55) der der Anschlussgruppe (30) zugeordneten ersten Schaltmittelgruppe (50) verbunden waren, diese von einer der Anschlussgruppe (30) zugeordneten zweiten Stromversorgungseinrichtung (30) mit Strom versorgt werden.
